# EUROPEAN PATENT APPLICATION

(11) **EP 2 613 236 A1**
(43) Date of publication of application: **10.07.2013**
(21) Application number: 11821107.7
(22) Date of filing: 29.08.2011
(51) Int. Cl.: G06F 3/048

(54) **MOBILE TERMINAL, AND METHOD AND APPARATUS FOR PROCESSING DISPLAYED INFORMATION ON TOUCH SCREEN THEREOF**

(30) Priority: 01.09.2010 CN 201010278689
(71) Applicant: Huizhou TCL Mobile Communication Co., Ltd., Huizhou, Guangdong 516006 (CN)
(72) Inventor: CHENG, Quan, Guangdong 516006 (CN)
(74) Representative: Petraz, Gilberto Luigi
(86) International application number: PCT/CN2011/079069
(87) International publication number: WO 2012/028081

(57) **Abstract**

The present invention relates to a mobile terminal technology. The present invention discloses a method for processing information displayed on a touch screen of a mobile terminal, and said method comprises steps of: determining whether a touch gesture received by the touch screen is made by at least two contact points; determining whether sliding motions made by each contact point onto the touch screen satisfy criteria set in the mobile terminal if the touch gesture received by the touch screen is a gesture made by the at least two contact points; deleting the information displayed on current interface if satisfying the criteria; wherein the criteria are that the at least two contact points on the touch screen are slid parallel to each other, associated sliding motions for each contact point are oriented in opposite directions, and an angle between the associated sliding motions is within an angle threshold set in the mobile terminal. The present invention can delete the information displayed on the interface quickly and conveniently and improve the interactivity of the mobile terminal and the user.

## Description

### TECHNICAL FIELD OF THE INVENTION

The present invention relates to a mobile terminal technology, and more particularly, to a method and device for processing information displayed on a touch screen of a mobile terminal.

### BACKGROUND OF THE INVENTION

As a mobile terminal technology is gradually developed, a user's demand for mobile terminal's function is higher and higher.

For a mobile terminal having a touch screen, a user carries out operations applied to an interface by making various finger gestures on the touch screen when using the screen as an apparatus of man machine interactive interface. Generally speaking, there are many factors to be taken into consideration in designing finger behaviors in order to achieve higher user satisfaction, for example, simplification of operation, realized functions, and whether operation behaviors match the realized functions or not. In general, a design is deemed as a good design if an operation behavior as to some particular function and a similar behavior in real life form a mapping or a metaphor.

If a cell phone displays some contents having respective items, such as text messages, phone calls, and contacts, there is a need for a user to delete all the contents. In the conventional cell phone, an operation to delete all the entries is achieved by pressing a menu key and then selecting an item "Delete All" in the menu. This approach needs to press two or more times to accomplish the operation. The procedure is trivial, and this is quite inconvenient for the user.

How to delete the information displayed on the interface quickly and conveniently and improve the interactivity of the mobile terminal and the user is a trend of the research in the mobile terminal technology.

### SUMMARY OF THE INVENTION

An objective of the present invention is to provide a method for processing information displayed on a touch screen of a mobile terminal, for being able to delete the information displayed on the interface quickly and conveniently and improve the interactivity of the mobile terminal and the user.

The embodiment of the present invention is implemented by a method for processing information displayed on a touch screen of a mobile terminal, and said method comprises steps of:
determining whether a touch gesture received by the touch screen is made by at least two contact points;
determining whether sliding motions made by each contact point onto the touch screen satisfy criteria set in the mobile terminal if the touch gesture received by the touch screen is a gesture made by the at least two contact points;
deleting the information displayed on current interface if satisfying the criteria;
wherein the criteria are that the at least two contact points on the touch screen are slid parallel to each other, associated sliding motions for each contact point are oriented in opposite directions, and an angle between the associated sliding motions is within an angle threshold set in the mobile terminal.

Another objective of the present invention is to provide a device for processing information displayed on a touch screen of a mobile terminal, and said device comprises:
a point determination module, for determining whether a touch gesture received by the touch screen is made by at least two contact points;
a gesture determination module, for determining whether sliding motions made by each contact point onto the touch screen satisfy criteria set in the mobile terminal;
a deleting module, for deleting the information displayed on current interface;
wherein the criteria are that the at least two contact points on the touch screen are slid parallel to each other, associated sliding motions for each contact point are oriented in opposite directions, and an angle between the associated sliding motions is within an angle threshold set in the mobile terminal.

Still another objective of the present invention is to provide a mobile terminal having a touch screen, and said mobile terminal comprises the information processing device provided in the embodiment of the present invention.

In the embodiment of the present invention, the information displayed on current interface may be directly deleted if an user's operation to the touch screen satisfies the criteria arranged in the mobile terminal. The embodiment of the present invention not merely can delete the information displayed on the interface quickly and conveniently, but also can greatly improve the interactivity of the mobile terminal and the user. It is beneficial for the promotion of the mobile terminal.

### BRIEF DESCRIPTION OF THE DRAWINGS

FIG. 1 is a flow chart of a method for processing information displayed on a touch screen of a mobile terminal according to an embodiment of the present invention.

FIG. 2 is a structural diagram showing a device for processing information displayed on a touch screen of a mobile terminal according to an embodiment of the present invention.

### DETAILED DESCRIPTION OF THE INVENTION

To make the objectives, technical schemes, and advantages of the present invention more clear, the present invention will be described in detail as follows in conjunction with drawings and embodiments. It should be understood that the embodiments described herein are merely used for interpreting the present invention, but the present invention is not limited thereto.

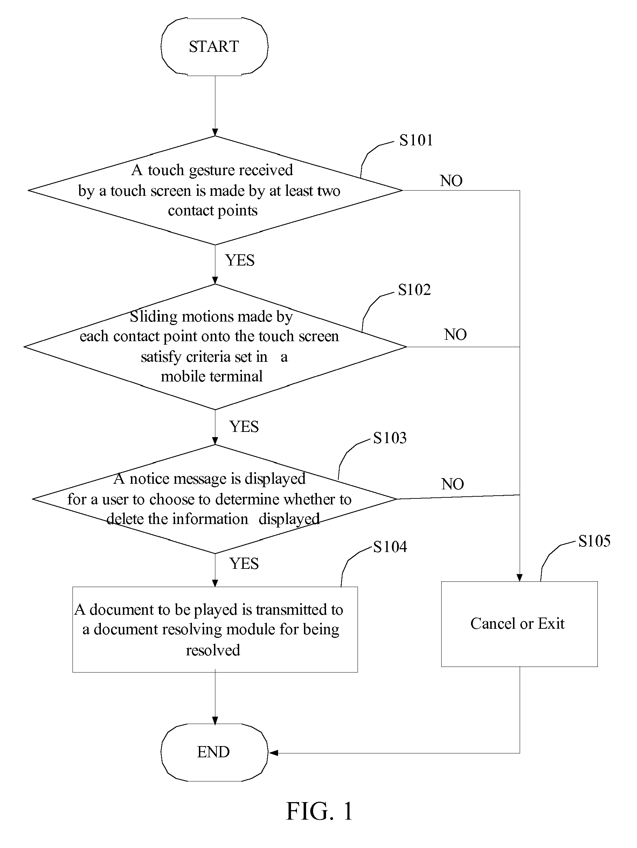

FIG. 1 is a flow chart of a method for processing information displayed on a touch screen of a mobile terminal according to an embodiment of the present invention.

In Step S101, determine whether a touch gesture received by the touch screen is made by at least two contact points. If yes, go to Step S102, or else go to Step S105, i.e., cancel or exit.

When determining whether the touch gesture received by the touch screen is made by the at least two contact points, it is to directly determine whether the touch gesture is made by two contact points in the embodiment of the present invention. Of course, it is also can be made by three contact points or four contact points, which will not be detailed here.

In Step S102, determine whether sliding motions made by each contact point onto the touch screen satisfy criteria set or arranged in the mobile terminal. If satisfying the criteria, go to Step S103, or else go to Step S105.

The criteria are that the at least two contact points on the touch screen are slid parallel to each other, associated (or continuous) sliding motions for each contact point are oriented in opposite directions, and an angle between the associated (or continuous) sliding motions is within an angle threshold set in the mobile terminal.

Preferably, the angle threshold set in the mobile terminal is 45 degrees.

For example, firstly, a user touches the screen with two fingers at the same time. Then, the two fingers move together in an arbitrary direction, and move back and forth for at least three times, simulating an eraser to make a motion of erasing. The first sliding motion and the second sliding motion are oriented in opposite directions, and an angle therebetween has to be smaller than 45 degrees; it is similar for the second and the third sliding motions. The whole slide behavior needs to be accomplished in 2 seconds, and the two fingers leave the screen until the gesture is done.

In Step S103, a notice message is displayed for the user to choose to determine whether to delete the selected information. If the user chooses "yes", go to Step S104. If the user chooses "no", go to Step S105.

In Step S104, the information displayed on current interface is deleted.

In Step S105, the deletion of the current information is cancelled.

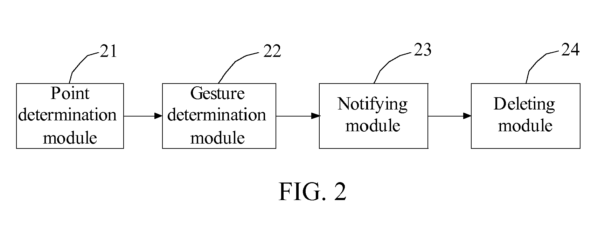

FIG. 2 is a structural diagram showing a device for processing information displayed on a touch screen of a mobile terminal according to an embodiment of the present invention.

A point determination module 21 determines whether a touch gesture received by the touch screen is made by at least two contact points. Preferably, the point determination module 21 directly determines whether the touch gesture is a gesture made by two contact points.

If the point determination module 21 determines that the touch gesture received by the touch screen is a gesture made by the at least two contact points, a gesture determination module 22 determines whether sliding motions made by each contact point onto the touch screen satisfy criteria set or arranged in the mobile terminal.

The criteria are that the at least two contact points on the touch screen are slid parallel to each other, associated (or continuous) sliding motions for each contact point are oriented in opposite directions, and an angle between the associated (or continuous) sliding motions is within an angle threshold set in the mobile terminal.

Preferably, the angle threshold set in the mobile terminal is 45 degrees.

If the gesture determination module 22 determines that the sliding motions made by each contact point onto the touch screen satisfy the criteria set in the mobile terminal, a notifying module 23 displays a notice message for a user to choose whether to delete the selected information.

If the user chooses "yes", a deleting module 24 will delete the information displayed on current interface.

The embodiment of the present invention further provides a mobile terminal having a touch screen. The aforesaid mobile terminal comprises the information processing device provided in the embodiment of the present invention. Since said device is detailedly described above, it is not repeated herein.

In the embodiment of the present invention, the information displayed on current interface may be directly deleted if an user's operation to the touch screen satisfies the criteria arranged in the mobile terminal. The embodiment of the present invention not merely can delete the information displayed on the interface quickly and conveniently, but also can greatly improve the interactivity of the mobile terminal and the user. It is beneficial for the promotion of the mobile terminal.

It should be understood that a person skilled in the art can modify or alter according to the above descriptions. However, all modifications, alterations, and improvements should be within the scope of the appending claims of the present invention.

## Claims

1. A method for processing information displayed on a touch screen of a mobile terminal, **characterized in that** said method comprises steps of:
determining whether a touch gesture received by the touch screen is made by at least two contact points;
determining whether sliding motions made by each contact point onto the touch screen satisfy criteria set in the mobile terminal if the touch gesture received by the touch screen is a gesture made by the at least two contact points;
deleting the information displayed on current interface if satisfying the criteria;
wherein the criteria are that the at least two contact points on the touch screen are slid parallel to each other, associated sliding motions for each contact point are oriented in opposite directions, and an angle between the associated sliding motions is within an angle threshold set in the mobile terminal.

2. The method according to Claim 1, **characterized in that** before deleting the information displayed on the current interface, said method further comprises a step of:
displaying a notice message for a user to choose to determine whether to delete selected information or not.

3. The method according to Claim 1, **characterized in that** the angle threshold set in the mobile terminal is 45 degrees.

4. The method according to Claim 1, **characterized in that** whether the touch gesture received by the touch screen is a gesture made by two contact points is directly determined when determining whether the touch gesture is made by the at least two contact points.

5. A device for processing information displayed on a touch screen of a mobile terminal, **characterized in that** said device comprises:
a point determination module, for determining whether a touch gesture received by the touch screen is made by at least two contact points;
a gesture determination module, for determining whether sliding motions made by each contact point onto the touch screen satisfy criteria set in the mobile terminal;
a deleting module, for deleting the information displayed on current interface;
wherein the criteria are that the at least two contact points on the touch screen are slid parallel to each other, associated sliding motions for each contact point are oriented in opposite directions, and an angle between the associated sliding motions is within an angle threshold set in the mobile terminal.

6. The device according to Claim 5, **characterized in that** said device further comprises:
a notifying module, for displaying a notice message for a user to choose to determine whether to delete selected information or not.

7. The device according to Claim 5, **characterized in that** the angle threshold set in the mobile terminal is 45 degrees.

8. The device according to Claim 5, **characterized in that** whether the touch gesture received by the touch screen is a gesture made by two contact points is directly determined when the point determination module determines whether the touch gesture is made by the at least two contact points.

9. A mobile terminal having a touch screen, **characterized in that** said mobile terminal comprises an information processing device according to any one of Claims 5-8.
